# FASCICULE DE BREVET EUROPEEN

(11) **EP 2 535 215 B1**
(45) Date de publication et mention de la délivrance du brevet: **29.10.2014**
(21) Numéro de dépôt: 12168080.5
(22) Date de dépôt: 15.05.2012
(51) Int. Cl.: B60H 1/00, B29C 45/00

(54) **Boîtier d'une installation de ventilation comprenant une pluralité de zones à module d'élasticité distinct**
Gehäuse einer Belüftungsanlage, das eine Vielzahl von Zonen mit ausgeprägtem Elastizitätsmodul umfasst
Housing of a ventilation system comprising a plurality of zones with separate modulus of elasticity

(30) Priorité: 16.06.2011 FR 1101856
(43) Date de publication de la demande: 19.12.2012
(73) Titulaire: Valeo Systemes Thermiques, 78320 Le Mesnil Saint Denis (FR)
(72) Inventeur: Cornu, Laurence, 78730 SAINT ARNOULT EN YVELINES (FR); Droulez, Eric, 92150 SURESNES (FR); Aubry, Franck, 28230 DROUE SUR DROUETTE (FR); Legros, Philippe, 783210 SAINT CYR L'ECOLE (FR); Truillet, Franck, 28410 BU (FR)
(74) Mandataire: Vieillevigne, Sébastien Nicolas Bernard

(56) Documents cités:
- DE-A1-102005 027 566
- DE-A1-102008 002 408
- US-A- 5 866 224
- "MASSGESCHNEIDERTE THERMOPLASTE MIT LAYERSTRUKTUREN UND ENDLOSFASER-VERSTAERKUNG", KUNSTOFFE INTERNATIONAL, CARL HANSER VERLAG, MUNCHEN, DE, no. 9, 1 septembre 2003 (2003-09-01), pages 44-47, XP001155507, ISSN: 0023-5563

## Description

Le secteur technique de la présente invention est celui des installations de ventilation, chauffage et/ou climatisation pour véhicule automobile. Plus particulièrement, l'invention vise au moins une des parois constitutives de l'installation, appelée boîtier, tel que divulgué par DE 10 2008 002 408 A1.

Un véhicule automobile est en général équipé d'une installation de ventilation, chauffage et/ou climatisation dont la fonction est de canaliser un flux d'air entrant dans l'habitacle du véhicule. Cette installation est constituée d'une entrée d'air, d'un pulseur chargé de mettre en mouvement le flux d'air dans l'installation, d'un ou plusieurs échangeurs de chaleur destinés à transférer ou retirer des calories au flux d'air et d'un ou plusieurs volets chargés de contrôler une proportion du flux d'air envoyée vers une bouche de sortie de l'installation. Ces composants sont rassemblés et maintenus ensemble par un boîtier qui forme une enveloppe de réception de ces composants ainsi qu'un canal de circulation du flux d'air, ce boîtier étant formé par au moins une paroi de séparation entre un volume interne de l'installation et le milieu environnant l'installation.

Une telle installation est habituellement solidarisée à un élément de structure du véhicule. Le poids de cette installation et les contraintes vibratoires imposent une réalisation particulière du boîtier. En effet, les points de fixation présentent des renforts mécaniques qui prennent la forme d'une pluralité de nervures. Ces dernières sont en nombre important et s'étendent dans un plan généralement perpendiculaire au plan de la face du boîtier qui canalise le flux d'air.

Cependant, ce type de point de fixation souffre d'inconvénients majeurs.

Un des principaux inconvénients réside dans le poids supplémentaire représenté par ces nervures de renforcement.

Un autre inconvénient de l'état de la technique cité ci-dessus est que ces nervures occupent un espace important. Une telle occupation est au détriment des autres composants à installer sur le véhicule puisque ces nervures sont souvent en interférence avec un faisceau de câbles ou avec un tube de transport d'un fluide depuis le compartiment moteur vers l'échangeur installé dans le boîtier de l'installation, notamment quand ce boîtier est installé sous une planche de bord dans l'habitacle du véhicule.

Le but de la présente invention est donc de résoudre les inconvénients décrits ci-dessus principalement en proposant un boîtier d'une installation de ventilation pour véhicule qui présente, d'une part, des points de fixation réalisés en un matériau renforcé et adapté au montage sur un élément de structure du véhicule, et d'autre part, des portions ou zones réalisées en un matériau mécaniquement moins résistant. Les points de fixation ne présentent plus de nervure de renforcement ce qui libère un espace non négligeable pour le passage d'un toron de câbles, par exemple.

L'invention a donc pour objet un boîtier d'une installation de ventilation pour véhicule comprenant une première zone, une troisième zone et une deuxième zone intercalée entre la première zone et la troisième zone, ledit boîtier étant monobloc, ladite première zone étant constituée d'un premier mélange d'une première matière avec une seconde matière alors que ladite troisième zone est constituée d'un troisième mélange de la première matière avec la seconde matière en une proportion différente de celle du premier mélange, **caractérisé en ce que** ladite deuxième zone est constituée d'un deuxième mélange de la première matière avec la seconde matière en une proportion comprise entre la proportion du premier mélange et la proportion du troisième mélange.

On entend par monobloc le fait que la première zone, la deuxième zone et la troisième zone sont moulées simultanément pour former un boîtier à caractère unitaire, c'est-à-dire inséparable sans destruction du boîtier.

Selon une première caractéristique de l'invention, un module d'élasticité de la première zone est différent d'un module d'élasticité de la troisième zone. On comprend ici que la résistance mécanique est différente entre la première zone et la troisième zone.

Selon une deuxième caractéristique de l'invention, le module d'élasticité de la première zone est supérieur au module d'élasticité de la troisième zone. En outre, la température de déflection sous charge, qui est synonyme de la résistance mécanique à la température, aussi connue par l'acronyme anglais HDT, est plus élevée dans la première zone que dans la troisième zone.

Selon une autre caractéristique de l'invention, la première zone comprend au moins en partie un dispositif de fixation apte à solidariser le boîtier sur un élément de structure du véhicule. Le support du boîtier est ainsi réalisé par la zone du boîtier la plus renforcée et la plus apte à résister aux contraintes mécaniques relatives à la fixation de l'installation sur le véhicule. Bien entendu, l'invention prévoit que l'intégralité du dispositif de fixation s'étend dans la première zone.

Selon encore une caractéristique de l'invention, la troisième zone est dépourvue de dispositif de fixation apte à solidariser le boîtier sur un élément de structure du véhicule.

Selon encore une autre caractéristique de l'invention, la première zone comprend au moins en partie, et éventuellement en totalité, une portion d'accostage apte à recevoir un groupe moto-ventilateur de l'installation de ventilation.

Selon encore une autre caractéristique de l'invention, la première zone comprend au moins en partie, et éventuellement en totalité, un bord délimitant au moins une bouche d'évacuation.

Le boîtier comprend une multiplicité de premières zones séparées les unes des autres par au moins une troisième zone et au moins une deuxième zone.

Avantageusement, la première zone et la troisième zone sont d'épaisseur identique.

En complément, la deuxième zone est d'épaisseur identique à celle de la première zone.

Avantageusement encore, la deuxième zone est définie par une largeur mesurée dans un plan de ladite deuxième zone entre la première zone et la troisième zone, ladite largeur étant au moins supérieure à 1 mm.

Avantageusement encore, la deuxième zone est définie par une largeur mesurée dans un plan de ladite deuxième zone entre la première zone et la troisième zone, ladite largeur étant au moins inférieure à 10 mm.

L'invention couvre également un procédé de fabrication d'un boîtier d'une installation de ventilation pour véhicule dans lequel :
- on réalise un premier mélange et un troisième mélange d'une même première matière avec une même seconde matière, ledit premier mélange et ledit troisième mélange présentant une proportion différente de première matière et de seconde matière,
- on injecte dans un moule le premier mélange avec le troisième mélange. Avantageusement, l'étape d'injection précédente peut être réalisée de manière simultanée.

L'invention vise enfin un outil de fabrication d'un boîtier d'une installation de ventilation pour véhicule, comprenant :
- une première trémie contenant une première matière,
- une seconde trémie contenant une seconde matière,
- un premier mélangeur raccordé à la première trémie et à la seconde trémie, et apte à mélanger la première matière avec la seconde matière selon une première proportion,
- un deuxième mélangeur raccordé à la première trémie et à la seconde trémie, et apte à mélanger la première matière avec la seconde matière selon une deuxième proportion différente de la première proportion,
- un moule raccordé distinctement au premier mélangeur et au deuxième mélangeur,
- un dispositif de contrôle apte à commander une injection du premier mélange et du deuxième mélange dans le moule, un tel dispositif de contrôle pouvant commander une injection simultanée du premier mélange et du deuxième mélange dans le moule.

Un tout premier avantage selon l'invention réside dans la possibilité de fabriquer un boîtier d'une installation de ventilation en une seule opération de moulage, selon laquelle l'injection des premier et deuxième mélanges est effectuée en simultanée et qui présente une première zone réalisée en un mélange renforcé mécaniquement ainsi qu'une seconde zone fabriquée avec un mélange moins résistant mécaniquement, et corrélativement moins couteux. II est alors possible de fabriquer des points de fixation de ce boîtier qui ne nécessitent pas de nervures de renfort, permettant ainsi de libérer un volume précieux pour le passage d'autres composants. Selon la composition de la matière injectée, il devient possible de répondre aux sollicitations thermiques différentes, de sorte qu'aux abords proches des radiateurs, le boîtier de l'installation de ventilation possède une résistance thermique plus élevée par rapport à une zone du boîtier guidant uniquement un flux d'air tempéré.

L'outil de fabrication selon l'invention comprend un dispositif d'injection bi-matière, permettant de réaliser au moins une zone du boîtier selon une superposition de couches de matière, et raccordé à au moins l'une d'entre les première et deuxième trémies et/ou d'au moins l'un d'entre les premier et deuxième mélangeurs.

D'autres caractéristiques, détails et avantages de l'invention ressortiront plus clairement à la lecture de la description donnée ci-après à titre indicatif en relation avec des dessins dans lesquels :
- la figure 1 est une vue de côté d'un boîtier selon l'invention,
- la figure 2 est un agrandissement d'une portion entourée d'un cercle sur la figure 1,
- la figure 3 est un graphique illustrant la proportion de mélange dans la première zone, la deuxième zone et la troisième zone du boîtier selon l'invention,
- la figure 4 est une représentation schématique d'un outil pour fabriquer le boîtier selon l'invention,
- la figure 5 est une représentation schématique d'une variante de réalisation de l'outil pour fabriquer le boîtier selon l'invention.

II faut noter que les figures exposent l'invention de manière détaillée pour mettre en oeuvre l'invention, lesdites figures pouvant bien entendu servir à mieux définir l'invention le cas échéant.

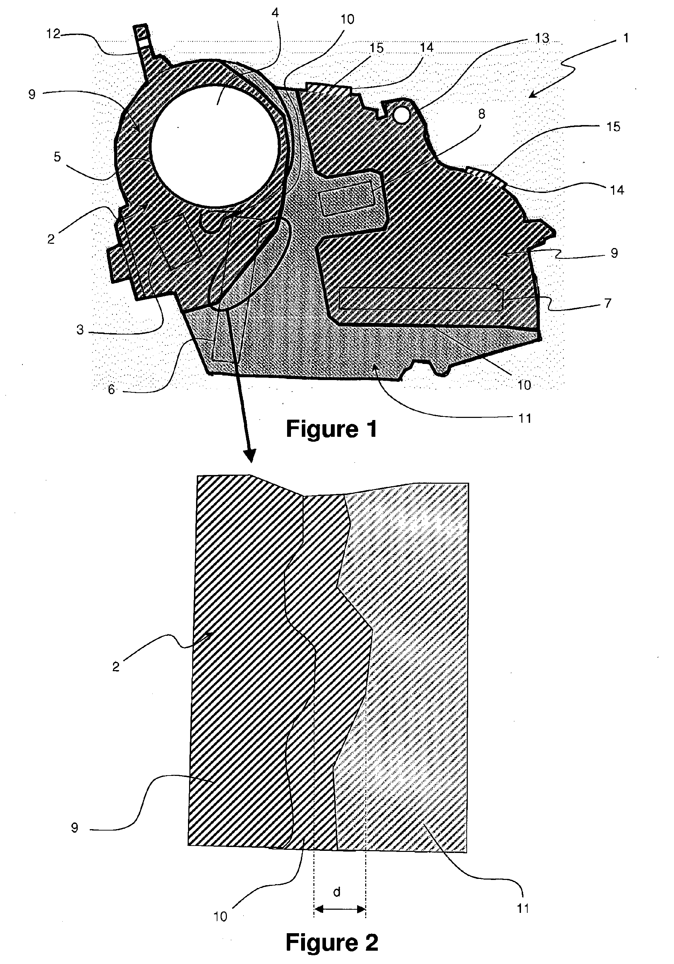

La figure 1 illustre un boîtier 1 d'une installation de ventilation installée dans un véhicule automobile. Cette installation est également susceptible d'assurer le chauffage et/ou la climatisation d'un flux d'air envoyé dans un habitacle de ce véhicule.

Ce boîtier est par exemple installé sous une planche de bord du véhicule à l'intérieur de l'habitacle. Dans une telle situation, le boîtier est confiné dans un espace extrêmement restreint délimité d'un côté par la planche de bord et de l'autre par un élément de structure du véhicule. Dans le cas présent, cet élément de structure est un tablier ou un plancher, tous deux solidaires de la caisse ou du châssis constituant le véhicule.

De manière alternative, un tel boîtier peut être installé sous le plancher du véhicule et en appui contre ce dernier. La garde au sol d'un véhicule étant imposée, on comprend bien que le volume disponible pour monter l'installation est restreint et il peut être avantageux de réduire l'encombrement général d'un tel boîtier au bénéfice de l'invention.

Le boîtier 1 illustré sur la figure 1 peut être réalisé sous la forme d'une unique pièce, par exemple un demi-boîtier. Alternativement, le boîtier peut être l'assemblage d'une pluralité de sous-boîtiers dont au moins un répond à la définition du boîtier selon la revendication 1.

Ce boîtier 1 comprend une paroi 2 qui entoure des composants installés dans l'installation. Ces composants sont, par exemple, un module de contrôle 3 de la vitesse de rotation d'un groupe moto-ventilateur (non représenté) destiné à se loger à l'intérieur de l'installation. Dans le cas présent, ce groupe moto-ventilateur traverse la paroi 2 du boîtier 1 au niveau d'une bouche 4 entourée par une portion d'accostage 5 sur laquelle repose le groupe moto-ventilateur quand celui-ci est installé.

Ces composants sont encore un évaporateur 6 et un radiateur 7 montés dans un volume interne de l'installation délimité par le boîtier 1. Cet évaporateur 6 et ce radiateur 7 sont installés de sorte à être traversé par un flux d'air mis en mouvement par le groupe moto-ventilateur. Ces composants peuvent également être au moins un actionneur électrique 8 destiné à commander la rotation de volet de contrôle du flux d'air à l'intérieur de l'installation.

Sur la figure 1, le boîtier comprend une première zone 9, une deuxième zone 10 et une troisième zone 11. Ces zones présentent des caractéristiques de résistance mécanique et/ou thermique différentes les unes par rapport aux autres. Bien entendu, le boîtier selon l'invention peut présenter une pluralité de premières zones 9 et/ou une pluralité de deuxièmes zones 10 et/ou une multiplicité de troisièmes zones 11. Dans l'exemple concret de la figure 1, on constate qu'il existe une seule et unique troisième zone 11 qui s'étend entre deux premières zones 9 distinctes. On notera enfin que la deuxième zone 10 est symbolisée sur cette figure par un trait à la frontière de la première zone 9 avec la troisième zone 11.

Un tel boîtier est fabriqué à partir d'un mélange de matériaux. Quelle que soit la zone envisagée, celle-ci est fabriquée à partir de deux matières distinctes, c'est-à-dire présentant des propriétés mécaniques et/ou thermiques différentes. Il s'agit d'une première matière, par exemple plastique, et d'une deuxième matière de type composite ou naturel.

Selon l'invention, la première zone 9 de ce boîtier 1 est un mélange d'une première matière avec une seconde matière, selon une première proportion. A titre d'exemple, la première matière est un polyoléfine vierge (PP ou PE), éventuellement additionné de charge minérale (talc, mica...) alors que la seconde matière est un polyoléfine semblable à celui de la première matière chargé avec des renforts tels que des fibres organiques ou naturelles, notamment courtes ou longues, par exemple en poudre ou billes, avec des taux prédéterminés (60% maxi). Ces fibres naturelles sont par exemple le lin, le chanvre et/ou le miscanthus. Les fibres organiques sont notamment des fibres de verre ou de carbone.

D'une manière générale et grâce à l'ajout des éléments listés ci-dessus, la deuxième matière présente des caractéristiques mécaniques et/ou thermiques plus élevées que la première matière. On comprend également que la première matière et la deuxième matière comprennent une même base, ici le polyoléfine vierge ou additionné, ce qui favorise la réalisation de la deuxième zone 10.

La première zone 9 présente un module d'élasticité E1 qui est différent d'un module d'élasticité E2 de la troisième zone 11. De manière plus précise, le module d'élasticité E1 de la première zone 9 est supérieur au module d'élasticité E2 de la troisième zone. On comprend de ce qui précède que la première zone 9 forme une zone renforcée par rapport à la troisième zone 11.

Le module d'élasticité E1 de la première zone 9 mesuré à 20°C est compris entre 2300 MPa et 5000 MPa.

Le module d'élasticité E2 de la troisième zone 11 mesuré à 20°C est compris entre 1700 MPa et 2800 MPa, avec le module d'élasticité E1 supérieur au module d'élasticité E2.

A 80°C, le module d'élasticité E1 de la première zone 9 est compris entre 1800 MPa et 4000 MPa.

Le module d'élasticité E2 de la troisième zone 11 mesuré à 80°C est compris entre 800 MPa et 2200 MPa, avec le module d'élasticité E1 supérieur au module d'élasticité E2.

Les valeurs ci-dessus sont mesurées selon la norme IS0178 à la vitesse de 2 mm/min.

On comprend donc que la première zone 9 est susceptible de mieux résister aux contraintes mécaniques que la troisième zone 11. C'est la raison pour laquelle la première zone 9 comprend au moins en partie un dispositif de fixation et/ou de centrage 12, 13 apte à solidariser le boîtier 1 sur un élément de structure du véhicule.

Sur la partie gauche de la figure 1, la première zone 9 comprend un plot de centrage et/ou plot de fixation 12 qui forme un dispositif de fixation de la partie supérieure du boîtier sur la structure du véhicule, sensiblement au niveau de la baie de pare-brise qui équipe ce dernier.

Sur la partie droite de la figure 1, la première zone 9 comprend une attache 13 qui forme un dispositif de fixation ménagé sur la partie supérieure du boîtier pour le fixer sur une poutre transversale qui traverse l'habitacle du véhicule.

Ces deux éléments formant entre autres les portions qui supportent le poids du boîtier et des composants qu'il renferme, et assurant le bon positionnement de l'appareil de fixation sur la structure du véhicule, il est nécessaire de les renforcer mécaniquement pour éviter toute rupture du boîtier. Alors que dans l'art antérieur, un tel renforcement intervenait au moyen de nervures perpendiculaires au plan de la paroi du boîtier, l'invention supprime ces nervures tout en conservant la résistance mécanique, ceci résultant du mélange de matières opéré pendant le moulage de la première zone 9.

Alternativement ou de manière complémentaire, la première zone 9 comprend au moins en partie la portion d'accostage 5 apte à recevoir le groupe moto-ventilateur de l'installation de ventilation. Cette portion d'accostage 5 forme un flanc d'une volute, c'est-à-dire un conduit en forme d'escargot autrement définit par conduit à largeur évolutive. Comme cette portion d'accostage 5 est soumise à des efforts importants, consécutifs notamment à un pompage, c'est-à-dire un déplacement d'une hélice constitutive du groupe moto-ventilateur selon la direction d'un axe de rotation du moteur qui entraîne l'hélice, l'invention permet de réaliser une paroi du boîtier qui résiste à ces efforts sans nécessité de nervures transversales supplémentaires.

Alternativement ou de manière complémentaire, la première zone 9 comprend au moins en partie un bord 14 délimitant une bouche d'évacuation 15 du flux d'air en direction de l'habitacle. Un tel bord 14 sert de zone de réception pour un conduit qui canalise le flux d'air au travers de la planche de bord. La première zone 9 présente ainsi une résistance mécanique adaptée à la liaison entre ce bord 14 et le conduit qui se rapporte dessus.

Alternativement ou de manière complémentaire, la première zone 9 comprend une zone d'arrimage d'un échangeur de chaleur, tel que l'évaporateur 6 ou le radiateur 7. Le mélange de la première matière avec la deuxième matière dans une première proportion affectée à la première zone 9 permet alors de résister thermiquement, ce qui évite des conformations compliquées de ce boîtier au droit des éléments chauds ou froids installés dans le boîtier.

La troisième zone 11 est quant à elle réalisée à partir d'un mélange de la première matière avec la deuxième matière mais selon une troisième proportion nettement différente de la proportion utilisée pour la première zone 9. A titre d'exemple, la proportion de première matière avec la deuxième matière constituant le premier mélange affecté à la première zone 9 est 80% de la première matière (polyoléfine vierge ou chargé) et 20% de la seconde matière (première matière chargé à 60%). Toujours à titre d'exemple, la proportion de première matière avec la deuxième matière constituant le troisième mélange affecté à la troisième zone 11 est au minimum 98% de la première matière (polyoléfine vierge ou chargé) et au maximum 2% de la seconde matière (première matière chargé à 60%). On comprend alors que la troisième zone 11, bien que parfaite pour canaliser le flux d'air et résister aux chocs mineurs, n'est pas adaptée pour supporter des sollicitations mécaniques ou thermiques importantes, notamment le support mécanique du poids du boîtier. La troisième zone 11 est ainsi dépourvue de dispositif de fixation apte à solidariser le boîtier sur un élément de structure du véhicule.

La figure 2 illustre plus en détail la situation de la deuxième zone 10 intercalée entre la première zone 9 et la troisième zone 11. Cette deuxième zone 10 n'est pas une jonction franche du premier mélange avec le troisième mélange. Il s'agit au contraire d'un deuxième mélange qui évolue dans une direction correspondant au plan de la paroi au droit de la deuxième zone 10.

Cette deuxième zone 10 est réalisée à partir d'un deuxième mélange de la première matière avec la seconde matière en une proportion comprise entre la proportion du premier mélange et la proportion du troisième mélange. En pratique, le premier mélange et le troisième mélange migrent l'un vers l'autre et se combinent par le fait que la base, par exemple le polypropylène, est identique entre la première matière et la seconde matière. Ainsi, la deuxième zone s'étend sur une largeur au moins comprise entre 1 et 10 mm mesurée dans le plan de la deuxième zone 10 au niveau d'une distance la plus faible qui sépare première zone 9 et la troisième zone 11.

La position de cette deuxième zone 10, et corrélativement de la première zone 9 et de la troisième zone 11, est garantie par la quantité de premier mélange et de troisième mélange injectés simultanément dans le moule de fabrication du boîtier. La viscosité de ces mélanges et la distance à parcourir dans le moule étant connues, il est possible de déterminer l'endroit où la première zone 9 et la troisième zone 11 se rejoignent pour former la deuxième zone 10.

Le boîtier selon l'invention est reconnaissable en ce que la première zone 9 et la troisième zone 11 sont d'épaisseurs sensiblement identiques, et par le fait que la première zone 9 présente un module d'élasticité E1 nettement supérieur au module d'élasticité E2 de la troisième zone 11. Il est également avantageux que la deuxième zone 10 soit d'épaisseur identique à celle de la première zone 9 et de la troisième zone 11.

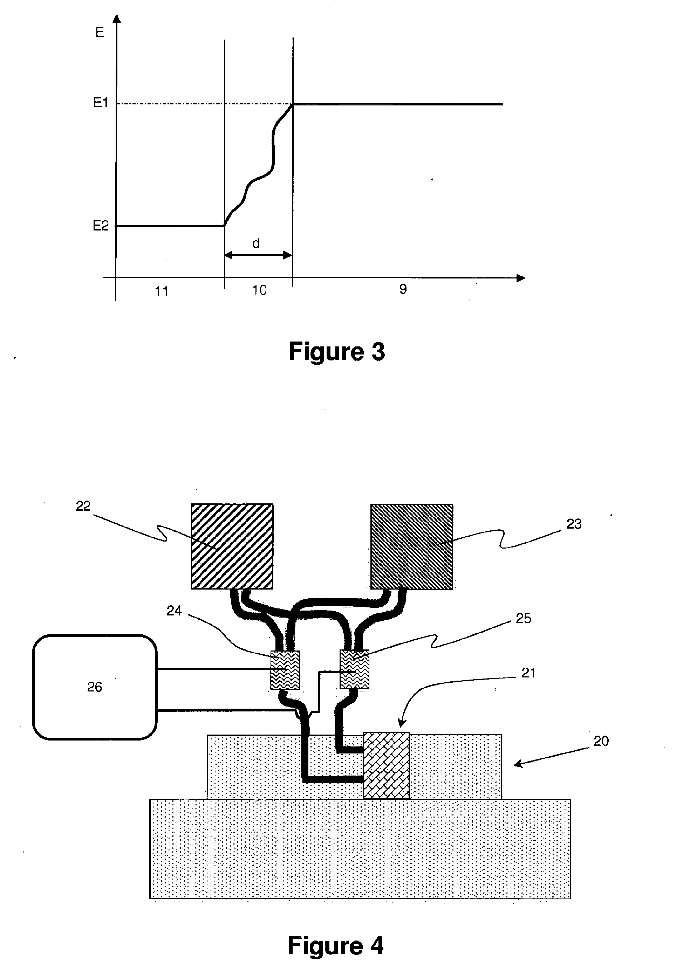

La figure 3 est un graphique qui illustre l'évolution des mélanges, en partant à gauche du graphique, de la troisième zone 11 pour traverser la deuxième zone 10 et finir dans la première zone 9. En abscisse, on trouve une illustration de ce déplacement au passage d'une zone à l'autre. En ordonnée, on trouve une illustration des propriétés du mélange réalisé dans la zone concernée, par exemple au moyen du module d'élasticité de ces zones.

La troisième zone 11 présente le module d'élasticité E2 qui résulte du mélange de la première matière avec la seconde matière selon la troisième proportion. Au franchissement de la deuxième zone 10, il s'opère un deuxième mélange qui résulte d'un mixage du premier mélange avec le troisième mélange sur une distance au minimum égale à d. Cette deuxième zone 10 présente alors des propriétés mécaniques et/ou thermiques intermédiaires situées entre celles de la première zone 9 et celles de la troisième zone 11. Le module d'élasticité évolue jusqu'à atteindre la valeur E1 caractérisant la première zone 9.

La figure 4 montre de manière schématique un outil de fabrication d'un boîtier 1 d'une installation de ventilation pour véhicule.

Cet outil comprend une presse à injection 20 qui reçoit un moule 21, ce moule étant l'empreinte qui définit la forme du boîtier 1.

Cette presse à injection 20 est alimentée par une première trémie 22, plus généralement appelée premier contenant, d'une première matière et par une seconde trémie 23 d'une seconde matière, cette seconde trémie étant plus généralement appelée second contenant. Ces deux trémies reçoivent la première matière et la seconde matière sous forme de granulés, par exemple.

L'outil selon l'invention comprend encore un premier mélangeur 24 raccordé à la première trémie 22 et à la seconde trémie 23 par des conduites appropriées. Ce premier mélangeur 24 est apte à mélanger la première matière avec la seconde matière selon une première proportion en vue de fabriquer la première zone du boîtier.

Un deuxième mélangeur 25 est prévu dans l'outil. Il est raccordé à la première trémie 22 et à la seconde trémie 23 par des canalisations appropriées et est apte à mélanger la première matière avec la seconde matière selon une proportion différente de la première proportion, notamment une proportion dédiée à la troisième zone constituant le boîtier.

Le moule 21 est raccordé distinctement au premier mélangeur 24 et au deuxième mélangeur 25 par des conduites dédiées, ces dernières pouvant comprendre chacune une vis d'injection chargée de pousser dans le moule le mélange opéré par le mélange concerné.

L'outil selon l'invention comprend encore un dispositif de contrôle 26 destiné à commander ou contrôler une injection simultanée dans le moule 21 des proportions de mélange générées par le premier mélangeur 24 et le deuxième mélangeur 25.

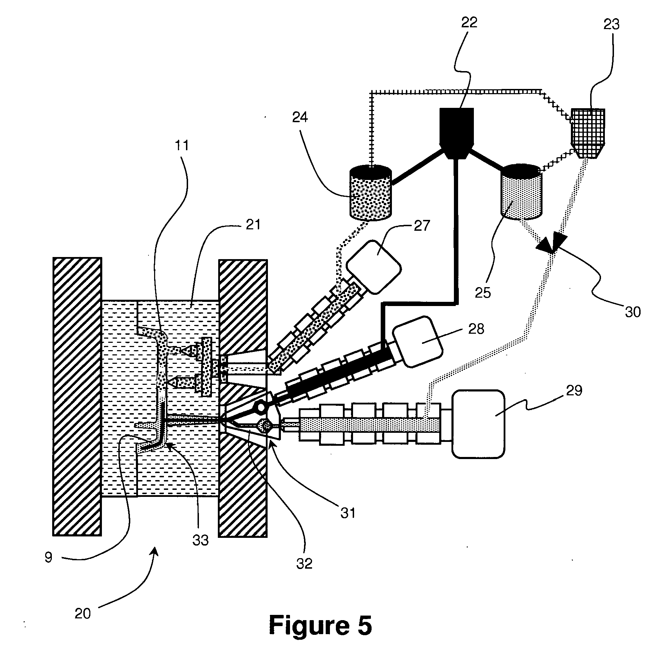

La figure 5 montre une variante de l'outil décrit à la figure 4. Les éléments identiques portent les mêmes références et on se reportera à la description de la figure 4 pour en connaître la structure.

L'outil comprend trois têtes d'injection distinctes. Une première tête d'injection 27 est raccordée au premier mélangeur 24 alors qu'une deuxième tête d'injection 28 est raccordée à la première trémie 22. On comprend ainsi que la deuxième tête d'injection 28 fournit au moule 21 la première matière, sans que celle-ci soit mélangée avec la deuxième matière présente dans la seconde trémie 23.

Une troisième tête d'injection 29 reçoit soit directement la seconde matière en provenance de la seconde trémie, soit le deuxième mélange en provenance du deuxième mélangeur 25. Un tel choix est organisé par une vanne 30 placée sous la dépendance du dispositif de contrôle 26, tel que représenté sur la figure 4.

La deuxième tête d'injection 28 et la troisième tête d'injection 29 se combinent dans un dispositif d'injection bi-matière 31, permettant de réaliser au moins la zone du boîtier, par exemple la première zone 9, selon une superposition de couches de matières 33, autrement appelée structure sandwich. Une telle organisation apporte notamment le renfort mécanique dévolu à la première zone telle qu'illustrée sur les figures 1 et 2. Ce dispositif d'injection bi-matière 31 comprend également un cône d'injection 32 chargé de gérer la circulation des matières mettant en oeuvre la superposition de couches de matière.

On notera enfin que le dispositif d'injection bi-matière 31 est raccordé à la première trémie 22 et/ou à la seconde trémie 23 mais il peut également est raccordé au premier mélangeur 24 et/ou eu deuxième mélangeur 25.

On notera que les outils détaillés aux figures 4 et 5 sont particulièrement adaptés à la fabrication d'un boîtier tel qu'illustré aux figures 1 et 2, les caractéristiques évoquées à cette occasion étant transposables à l'outil de fabrication détaillé ci-dessus.

L'invention vise enfin un procédé de fabrication d'un boîtier d'une installation de ventilation pour véhicule dans lequel :
- on réalise un premier mélange et un troisième mélange d'une même première matière avec une même seconde matière, ledit premier mélange et ledit troisième mélange présentant une proportion différente de première matière et de seconde matière,
- on injecte dans un moule le premier mélange, éventuellement simultanément, avec le troisième mélange.

Un tel procédé a pour effet de générer un deuxième mélange qui s'étend entre une première zone du boîtier réalisée par le premier mélange et une troisième zone du boîtier réalisée par le troisième mélange. Le deuxième mélange présente une proportion de première matière et de seconde matière intermédiaire entre la proportion de première matière et de seconde matière du premier mélange et la proportion de première matière et de seconde matière du troisième mélange.

Un tel procédé est particulièrement adapté à la fabrication d'un boîtier présenté aux figures 1 et 2.

## Revendications

1. Boîtier (1) d'une installation de ventilation pour véhicule comprenant une première zone (9), une troisième zone (11) et une deuxième zone (10) intercalée entre la première zone (9) et la troisième zone (11), ledit boîtier (1) étant monobloc, ladite première zone (9) étant constituée d'un premier mélange d'une première matière avec une seconde matière alors que ladite troisième zone (11) est constituée d'un troisième mélange de la première matière avec la seconde matière en une proportion différente de celle du premier mélange, **caractérisé en ce que** ladite deuxième zone (10) est constituée d'un deuxième mélange de la première matière avec la seconde matière en une proportion comprise entre la proportion du premier mélange et la proportion du troisième mélange.

2. Boîtier selon la revendication 1, dans lequel un module d'élasticité (E1) de la première zone (9) est différent d'un module d'élasticité (E2) de la troisième zone (11).

3. Boîtier selon la revendication 2, dans lequel le module d'élasticité (E1) de la première zone (9) est supérieur au module d'élasticité (E2) de la troisième zone (11).

4. Boîtier selon la revendication 3, dans lequel la première zone (9) comprend au moins en partie un dispositif de fixation (12, 13) apte à solidariser le boîtier (1) sur un élément de structure du véhicule.

5. Boîtier selon la revendication 4, dans lequel la troisième zone (11) est dépourvue de dispositif de fixation apte à solidariser le boîtier (1) sur un élément de structure du véhicule.

6. Boîtier selon l'une quelconque des revendications précédentes, dans lequel la première zone (9) comprend au moins en partie une portion d'accostage (5) apte à recevoir un groupe moto-ventilateur de l'installation de ventilation.

7. Boîtier selon l'une quelconque des revendications précédentes, dans lequel la première zone (9) comprend au moins en partie un bord (14) délimitant au moins une bouche d'évacuation (15).

8. Boîtier selon l'une quelconque des revendications précédentes, comprenant une multiplicité de premières zones (9) séparées les unes des autres par au moins une troisième zone (11) et au moins une deuxième zone (10).

9. Boîtier selon l'une quelconque des revendications précédentes, dans lequel la première zone (9) et la troisième zone (11) sont d'épaisseur identique.

10. Boîtier selon l'une quelconque des revendications précédentes, dans lequel la deuxième zone (10) est définit par une largeur mesurée dans un plan de ladite deuxième zone (10) entre la première zone (9) et la troisième zone (11), ladite largeur étant au moins supérieure à 1 mm.

11. Boîtier selon l'une quelconque des revendications précédentes, dans lequel la deuxième zone (10) est définit par une largeur mesurée dans un plan de ladite deuxième zone (10) entre la première zone (9) et la troisième zone (11), ladite largeur étant au moins inférieure à 10 mm.

12. Procédé de fabrication d'un boîtier (1) d'une installation de ventilation pour véhicule dans lequel :
- on réalise un premier mélange et un troisième mélange d'une même première matière avec une même seconde matière, ledit premier mélange et ledit troisième mélange présentant une proportion différente de première matière et de seconde matière,
- on injecte dans un moule (21) le premier mélange simultanément avec le troisième mélange, ce qui a pour effet de générer un deuxième mélange qui s'étend entre une première zone du boîtier réalisée par le premier mélange et une troisième zone du boîtier réalisée par le troisième mélange, le deuxième mélange présentant une proportion de première matière et de seconde matière intermédiaire entre la proportion de première matière et de seconde matière du premier mélange et la proportion de première matière et de seconde matière du troisième mélange.

13. Outil de fabrication d'un boîtier (1) d'une installation de ventilation pour véhicule, comprenant :
- une première trémie contenant (22) d'une première matière,
- une seconde trémie contenant (23) d'une seconde matière,
- un premier mélangeur (24) raccordé à la première trémie (22) et à la seconde trémie (23) et apte à mélanger la première matière avec la seconde matière selon une première proportion,
- un deuxième mélangeur (25) raccordé à la première trémie (22) et à la seconde trémie (23) et apte à mélanger la première matière avec la seconde matière selon une deuxième proportion différente de la première proportion,
- un moule (21) raccordé distinctement au premier mélangeur (24) et au deuxième mélangeur (25),
- un dispositif de contrôle (26) apte à commander une injection du premier mélange et du deuxième mélange dans le moule (21).

14. Outil de fabrication selon la revendication 13, **caractérisé en ce qu'**il comprend un dispositif d'injection bi-matière (31), permettant de réaliser au moins une zone (9) du boîtier selon une superposition de couches de matières (33), et raccordé à au moins l'une d'entre les première et deuxième trémies (22, 23) et/ou d'au moins l'un d'entre les premier et deuxième mélangeurs (24, 25).

## Patentansprüche

1. Gehäuse (1) einer Belüftungsanlage für ein Fahrzeug, umfassend eine erste Zone (9), eine dritte Zone (11) und eine zweite Zone (10), die zwischen der ersten Zone (9) und der dritten Zone (11) angeordnet ist, wobei das Gehäuse (1) einstückig ist, wobei die erste Zone (9) von einer ersten Mischung eines ersten Materials mit einem zweiten Material gebildet ist, während die dritte Zone (11) von einer dritten Mischung des ersten Materials mit dem zweiten Material in einem anderen Verhältnis als jene der ersten Mischung gebildet ist, **dadurch gekennzeichnet, dass** die zweite Zone (10) von einer zweiten Mischung des ersten Materials mit dem zweiten Material in einem Verhältnis zwischen dem Verhältnis der ersten Mischung und dem Verhältnis der dritten Mischung gebildet ist.

2. Gehäuse nach Anspruch 1, wobei ein Elastizitätsmodul (E1) der ersten Zone (9) zu einem Elastizitätsmodul (E2) der dritten Zone (11) unterschiedlich ist.

3. Gehäuse nach Anspruch 2, wobei das Elastizitätsmodul (E1) der ersten Zone (9) größer als das Elastizitätsmodul (E2) der dritten Zone (11) ist.

4. Gehäuse nach Anspruch 3, wobei die erste Zone (9) mindestens teilweise eine Befestigungsvorrichtung (12, 13) umfasst, die geeignet ist, das Gehäuse (1) auf einem Strukturelement des Fahrzeugs zu befestigen.

5. Gehäuse nach Anspruch 4, wobei die dritte Zone (11) keine Befestigungsvorrichtung aufweist, die geeignet ist, das Gehäuse (1) auf einem Strukturelement des Fahrzeugs zu befestigen.

6. Gehäuse nach einem der vorhergehenden Ansprüche, wobei die erste Zone (9) mindestens teilweise einen Anschlussbereich (5) umfasst, der geeignet ist, einen Lüftersatz der Belüftungsanlage aufzunehmen.

7. Gehäuse nach einem der vorhergehenden Ansprüche, bei dem die erste Zone (9) mindestens teilweise einen Rand (14) umfasst, der mindestens eine Entleerungsöffnung (15) begrenzt.

8. Gehäuse nach einem der vorhergehenden Ansprüche, umfassend eine Vielzahl von ersten Zonen (9), die voneinander durch mindestens eine dritte Zone (11) und mindestens eine zweite Zone (10) getrennt sind.

9. Gehäuse nach einem der vorhergehenden Ansprüche, wobei die erste Zone (9) und die dritte Zone (11) von identischer Dicke sind.

10. Gehäuse nach einem der vorhergehenden Ansprüche, wobei die zweite Zone (10) durch eine Breite, gemessen in einer Ebene der zweiten Zone (10) zwischen der ersten Zone (9) und der dritten Zone (11), definiert ist, wobei die Breite mindestens größer als 1 mm ist.

11. Gehäuse nach einem der vorhergehenden Ansprüche, wobei die zweite Zone (10) durch eine Breite, gemessen in einer Ebene der zweiten Zone (10) zwischen der ersten Zone (9) und der dritten Zone (11), definiert ist, wobei die Breite mindestens kleiner als 10 mm ist.

12. Verfahren zur Herstellung eines Gehäuses (1) einer Belüftungsanlage für ein Fahrzeug, wobei:
- eine erste Mischung und eine dritte Mischung eines selben ersten Materials mit einem selben zweiten Material hergestellt wird, wobei die erste Mischung und die dritte Mischung ein unterschiedliches Verhältnis an erstem Material und an zweitem Material aufweisen,
- in eine Form (21) die erste Mischung gleichzeitig mit der dritten Mischung eingespritzt wird, was bewirkt, dass eine zweite Mischung erzeugt wird, die sich zwischen einer ersten Zone des Gehäuses, die mit der ersten Mischung hergestellt ist, und einer dritten Zone des Gehäuses, die mit der dritten Mischung hergestellt ist, erstreckt, wobei die zweite Mischung ein Verhältnis an erstem Material und an zweitem intermediärem Material zwischen dem Verhältnis an erstem Material und an zweitem Material der ersten Mischung und dem Verhältnis an erstem Material und an zweitem Material der dritten Mischung aufweist.

13. Werkzeug zur Herstellung eines Gehäuses (1) einer Belüftungsanlage für ein Fahrzeug, umfassend:
- einen ersten Trichter (22), der ein erstes Material enthält,
- einen zweiten Trichter (23) der ein zweites Material enthält,
- einen ersten Mischer (24), der an den ersten Trichter (22) und an den zweiten Trichter (23) angeschlossen und geeignet ist, das erste Material mit dem zweiten Material in einem ersten Verhältnis zu mischen,
- einen zweiten Mischer (25), der an den ersten Trichter (22) und an den zweiten Trichter (23) angeschlossen und geeignet ist, das erste Material mit dem zweiten Material in einem zweiten, zum ersten Verhältnis unterschiedlichen Verhältnis zu mischen,
- eine Form (21), die getrennt an den ersten Mischer (24) und an den zweiten Mischer (25) angeschlossen ist,
- eine Kontrollvorrichtung (26), die geeignet ist, ein Einspritzen der ersten Mischung und der zweiten Mischung in die Form (21) zu steuern.

14. Werkzeug zur Herstellung nach Anspruch 13, **dadurch gekennzeichnet, dass** es eine Bimaterialeinspritzvorrichtung (31) umfasst, die es ermöglicht, mindestens eine Zone (9) des Gehäuses gemäß einer Übereinanderlagerung von Materialschichten (33) herzustellen, und die an mindestens einen von den ersten und zweiten Trichtern (22, 23) und/oder mindestens einen von den ersten und zweiten Mischern (24, 25) angeschlossen ist.

## Claims

1. Housing (1) of a ventilation installation for a vehicle comprising a first zone (9), a third zone (11) and a second zone (10) inserted between the first zone (9) and the third zone (11), said housing (1) being of a single piece, said first zone (9) consisting of a first mixture of a first material with a second material whereas said third zone (11) consists of a third mixture of the first material with the second material in a different proportion from that of the first mixture, **characterized in that** said second zone (10) consists of a second mixture of the first material with the second material in a proportion lying between the proportion of the first mixture and the proportion of the third mixture.

2. Housing according to Claim 1, in which a modulus of elasticity (E1) of the first zone (9) is different from a modulus of elasticity (E2) of the third zone (11).

3. Housing according to Claim 2, in which the modulus of elasticity (E1) of the first zone (9) is greater than the modulus of elasticity (E2) of the third zone (11).

4. Housing according to Claim 3, in which the first zone (9) at least partly comprises a fixing device (12, 13) suitable for securing the housing (1) to a structural element of the vehicle.

5. Housing according to Claim 4, in which the third zone (11) is without any fixing device suitable for securing the housing (1) to a structural element of the vehicle.

6. Housing according to any one of the preceding claims, in which the first zone (9) at least partly comprises a docking portion (5) suitable for receiving a motor fan set of the ventilation installation.

7. Housing according to any one of the preceding claims, in which the first zone (9) at least partly comprises an edge (14) delimiting at least one discharge opening (15).

8. Housing according to any one of the preceding claims, comprising a multiplicity of first zones (9) separated from one another by at least one third zone (11) and at least one second zone (10).

9. Housing according to any one of the preceding claims, in which the first zone (9) and the third zone (11) are of identical thickness.

10. Housing according to any one of the preceding claims, in which the second zone (10) is defined by a width measured in a plane of said second zone (10) between the first zone (9) and the third zone (11), said width being at least greater than 1 mm.

11. Housing according to any one of the preceding claims, in which the second zone (10) is defined by a width measured in a plane of said second zone (10) between the first zone (9) and the third zone (11), said width being at least less than 10 mm.

12. Method for manufacturing a housing (1) of a ventilation installation for a vehicle in which:
- a first mixture and a third mixture of the same first material with the same second material are produced, said first mixture and said third mixture having a different proportion of first material and of second material,
- the first mixture is injected into a mould (21) simultaneously with the third mixture, which has the effect of generating a second mixture which extends between a first zone of the housing produced by the first mixture and a third zone of the housing produced by the third mixture, the second mixture having a proportion of first material and of second intermediate material that lies between the proportion of first material and of second material of the first mixture and the proportion of first material and of second material of the third mixture.

13. Tool for manufacturing a housing (1) of a ventilation installation for a vehicle, comprising:
- a first hopper containing (22) a first material,
- a second hopper containing (23) a second material,
- a first mixer (24) connected to the first hopper (22) and to the second hopper (23) and suitable for mixing the first material with the second material in a first proportion,
- a second mixture (25) connected to the first hopper (22) and to the second hopper (23) and suitable for mixing the first material with the second material in a second proportion different from the first proportion,
- a mould (21) connected separately to the first mixer (24) and to the second mixer (25),
- a control device (26) suitable for controlling an injection of the first mixture and of the second mixture into the mould (21).

14. Manufacturing tool according to Claim 13, **characterized in that** it comprises a two-material injection device (31), making it possible to produce at least one zone (9) of the housing by a superposition of layers of material (33), and connected to at least one of the first and second hoppers (22, 23) and/or at least one of the first and second mixers (24, 25).
